# EUROPEAN PATENT SPECIFICATION

(11) **EP 4 258 203 B1**
(45) Date of publication and mention of the grant of the patent: **06.05.2026**
(21) Application number: 23164773.6
(22) Date of filing: 28.03.2023
(51) Int. Cl.: G06T 3/18

(54) **SYSTEMS AND METHODS FOR PERFORMING VIRTUAL APPLICATION OF A RING WITH IMAGE WARPING**
SYSTEME UND VERFAHREN ZUR DURCHFÜHRUNG EINER VIRTUELLEN ANWENDUNG EINES RINGS MIT BILDVERZERRUNG
SYSTÈMES ET PROCÉDÉS POUR RÉALISER UNE APPLICATION VIRTUELLE D'UN ANNEAU AVEC DÉFORMATION D'IMAGE

(30) Priority: 29.03.2022 US 202263324681 P; 10.02.2023 US 202318167483
(43) Date of publication of application: 11.10.2023
(73) Proprietor: Perfect Mobile Corp., New Taipei City 231 (TW)
(72) Inventor: KUO, Chia-Chen, Taipei City (TW)
(74) Representative: Zinkler, Franz

(56) References cited:
- CN-A- 105 447 735
- CN-A- 106 373 086
- US-A1- 2020 013 182
- US-B1- 10 789 778
- US-B1- 10 976 829
- US-B1- 9 165 318

## Description

### CROSS-REFERENCE TO RELATED APPLICATION

This application claims priority to, and the benefit of, U.S. Provisional Patent Application entitled, "Method and System for Ring Virtual Try-on Based on Image Warping," having Serial No. 63/324,681, filed on March 29, 2022.

### TECHNICAL FIELD

The present disclosure generally relates to systems and methods for performing virtual application of a ring with image warping.
Document US 10976829 B1 is directed to systems and methods for displaying augmented-reality objects using a camera of an augmented-reality system to capture visual data for a structure of interest, such as a user's hand.
Document US 10789778 B1 describes systems and methods for displaying augmented-reality objects by utilizing weighted features to match a user's hand with a silhouette model for improved tracking of the user's hand.
Document US 9165318 B1 describes methods and systems of providing an augmented experience on a user device to facilitate user interaction with one or more virtual items.
Document CN 105447735 A relates to a finger ring on-line try-in system and a try-in method thereof.
Document CN 106373086 A relates to an augmented reality-based ring 2D online real-time trying method and system.
Document US 2020013182 A1 relates to a system and a method for determining ring sizes of users using an image.

### SUMMARY

The invention is set out in the appended set of claims.

In accordance with one embodiment, a method implemented in a computing device is disclosed according to claim 1, or according to claim 5.

In accordance with another embodiment, a system that comprises a memory storing instructions and a processor coupled to the memory is disclosed according to claim 8, or according to claim 16.

In accordance with another embodiment, a non-transitory computer-readable storage medium storing instructions to be implemented by a computing device is disclosed according to claim 12, or according to claim 17.

Other systems, methods, features, and advantages of the present disclosure will be apparent to one skilled in the art upon examining the following drawings and detailed description.

### BRIEF DESCRIPTION OF THE DRAWINGS

Various aspects of the disclosure are better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a computing device configured to perform virtual application of a ring with image warping according to various embodiments of the present disclosure.
FIG. 2 is a schematic diagram of the computing device of FIG. 1 in accordance with various embodiments of the present disclosure.
FIG. 3 is a top-level flowchart illustrating examples of functionality implemented as portions of the computing device of FIG. 1 for performing virtual application of a ring with image warping according to various embodiments of the present disclosure.
FIG. 4 illustrates an example user interface provided on a display of the computing device according to various embodiments of the present disclosure.
FIG. 5 illustrates the computing device in FIG. 1 identifying a target region for performing image warping according to various embodiments of the present disclosure.
FIG. 6 illustrates the computing device in FIG. 1 generating a displacement table for performing image warping on the target region based on attributes of the finger according to various embodiments of the present disclosure.
FIG. 7 illustrates application of the displacement table to the target region to generate a modified finger according to various embodiments of the present disclosure.
FIG. 8 illustrates virtual application of a ring on the modified finger after application of the displacement table according to various embodiments of the present disclosure.
FIG. 9 is a top-level flowchart illustrating examples of functionality implemented as portions of the computing device of FIG. 1 for performing virtual application of a ring with image warping according to an alternative embodiment of the present disclosure.

### DETAILED DESCRIPTION

The subject disclosure is now described with reference to the drawings, where like reference numerals are used to refer to like elements throughout the following description. Other aspects, advantages, and novel features of the disclosed subject matter will become apparent from the following detailed description and corresponding drawings.

There is a need for an improved way for allowing consumers to evaluate the appearance of rings when considering different rings of interest. The present disclosure is directed to systems and methods for achieving a more realistic appearance of rings on a user by performing virtual application of a rings using image warping based on attributes associated with the user's finger.

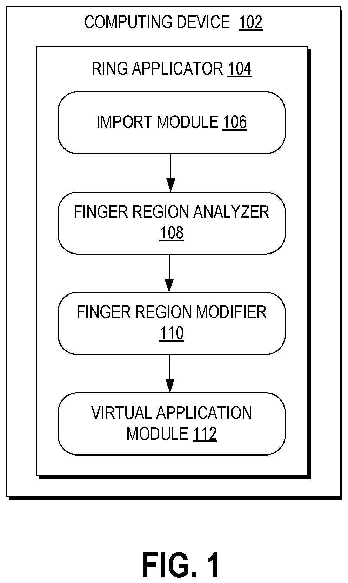

A description of a system for implementing virtual application of a ring with image warping is described followed by a discussion of the operation of the components within the system. FIG. 1 is a block diagram of a computing device 102 in which the embodiments disclosed herein may be implemented. The computing device 102 may comprise one or more processors that execute machine executable instructions to perform the features described herein. For example, the computing device 102 may be embodied as a computing device such as, but not limited to, a smartphone, a tablet-computing device, a laptop, and so on.

A ring applicator 104 executes on a processor of the computing device 102 and includes an import module 106, a finger region analyzer 108, a finger region modifier 110, and a virtual application module 112. The import module 106 is configured to obtain digital images of a user's hand for purposes of performing virtual application of one or more rings. For some embodiments, the import module 106 is configured to cause a camera (*e.g*., front-facing camera) of the computing device 102 to capture an image or a video of a user of the computing device 102. Alternatively, the import module 106 may obtain an image or video of the user from another device or server where the computing device 102 may be equipped with the capability to connect to the Internet.

The images obtained by the import module 106 may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. The video may be encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), 360 degree video, 3D scan model, or any number of other digital formats.

The finger region analyzer 108 is configured to identify the finger on the hand depicted in the image and determine attributes of the finger. For some embodiments, the finger region analyzer 108 is configured to determine attributes of the finger by identifying a target region between two knuckles (*e.g.,* the base knuckle and middle knuckle) on the finger. The finger region analyzer 108 then determines the coordinates of the target region, the boundary of the target region, and/or the orientation of the target region. The finger region analyzer 108 may determine the orientation of the target region by determining a roll angle of the target region, a yaw angle of the target region, and/or a pitch angle of the target region.

The finger region modifier 110 is configured to generate a displacement table comprising locations of pixels for the finger based on the attributes and apply the displacement table to generate a modified finger. For some embodiments, the finger region modifier 110 is configured to generate the displacement table comprising the locations of the pixels for the finger based on the attributes by generating a mapping function that comprises a non-linear warp function in an image domain based on the attributes.

For some embodiments, the finger region modifier 110 includes an artificial intelligence ("AI") engine configured to determine where the ring will be specifically positioned on the finger. The AI engine is further configured to generate attributes of the finger. The attributes may comprise coordinates of the target region, a boundary of the target region, and an orientation of the target region. The AI engine then generates a displacement table based on the attributes.

The displacement table generated by the AI engine may be embodied as a warp mesh where the displacement table specifies displacement of pixels in the region where the ring is positioned on the finger. The finger region modifier 110 applies the displacement table to generate a modified finger. The modified finger depicts the finger being squeezed by the ring, thereby achieving realistic virtual application of the ring. The virtual application module 112 then performs virtual application of a ring on the modified finger, thereby providing a more realistic depiction of the ring being worn on the user's finger.

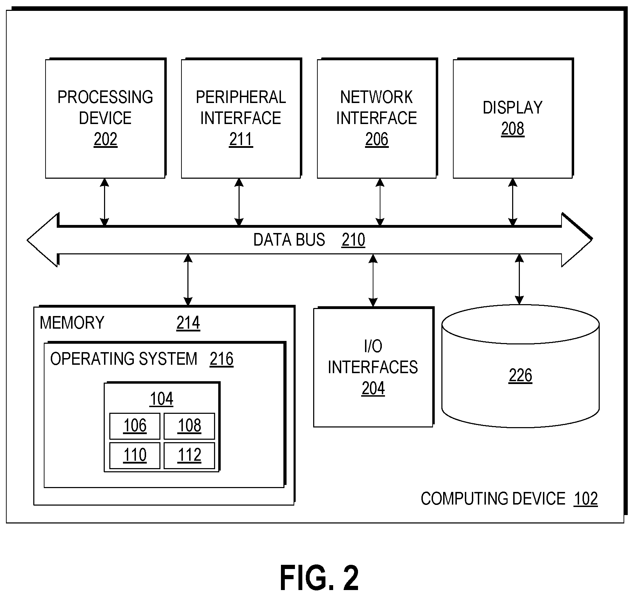

FIG. 2 illustrates a schematic block diagram of the computing device 102 in FIG. 1. The computing device 102 may be embodied as a desktop computer, portable computer, dedicated server computer, multiprocessor computing device, smart phone, tablet, and so forth. As shown in FIG. 2, the computing device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include a custom made processor, a central processing unit (CPU), or an auxiliary processor among several processors associated with the computing device 102, a semiconductor based microprocessor (in the form of a microchip), a macroprocessor, one or more application specific integrated circuits (ASICs), a plurality of suitably configured digital logic gates, and so forth.

The memory 214 may include one or a combination of volatile memory elements (*e.g.,* random-access memory (RAM, such as DRAM, and SRAM, *etc*.)) and nonvolatile memory elements (*e.g.,* ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software that may comprise some or all the components of the computing device 102 displayed in FIG. 1.

In accordance with such embodiments, the components are stored in memory 214 and executed by the processing device 202, thereby causing the processing device 202 to perform the operations/functions disclosed herein. For some embodiments, the components in the computing device 102 may be implemented by hardware and/or software.

Input/output interfaces 204 provide interfaces for the input and output of data. For example, where the computing device 102 comprises a personal computer, these components may interface with one or more input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

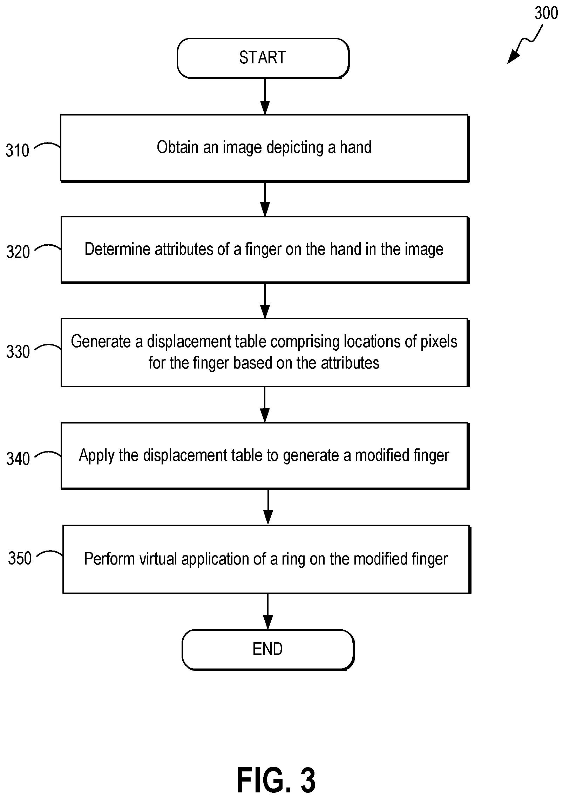

Reference is made to FIG. 3, which is a flowchart 300 in accordance with various embodiments for performing virtual application of a ring with image warping, where the operations are performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is displayed. For example, the order of execution of two or more blocks may be scrambled relative to the order shown. In addition, two or more blocks shown in succession in FIG. 3 may be executed concurrently or with partial concurrence.

At block 310, the computing device 102 obtains an image depicting a hand. As discussed above, the user may utilize a camera of the computing device 102 to capture an image of the user's hand. At block 320, the computing device 102 determines attributes of a finger on the hand in the image. For some embodiments, the computing device 102 determines attributes of the finger by identifying a target region between two knuckles (*e.g*., the base knuckle and middle knuckle) on the finger and determining coordinates of the target region, a boundary of the target region, and/or an orientation of the target region. For some embodiments, the computing device 102 determines the orientation of the target region by determining a roll angle of the target region, a yaw angle of the target region, and/or a pitch angle of the target region.

At block 330, the computing device 102 generates a displacement table comprising locations of pixels for the finger based on the attributes. For some embodiments, the computing device 102 generates the displacement table comprising the locations of the pixels for the finger based on the attributes by generating a mapping function comprising a non-linear warp function in an image domain based on the attributes. At block 340, the computing device 102 applies the displacement table to generate a modified finger. At block 350, the computing device 102 performs virtual application of a ring on the modified finger. Thereafter, the process in FIG. 3 ends.

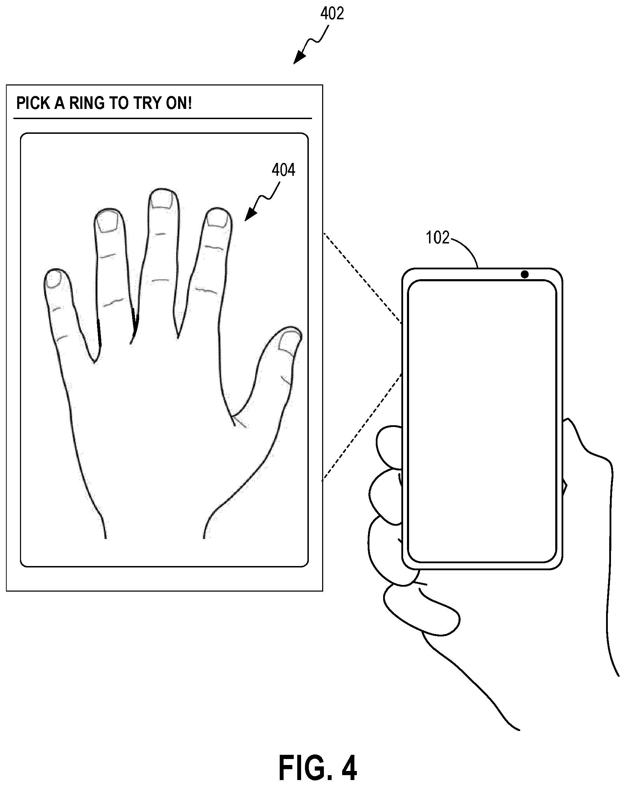

To illustrate further various aspects of the present invention, reference is made to the following figures described below. FIG. 4 illustrates an example user interface 402 provided on a display of the computing device 102 whereby an image of the user's hand 404 is captured and displayed to the user. As described above, the import module 106 (FIG. 1) executing in the computing device 102 can be configured to cause a camera of the computing device 102 to capture an image or a video of a user's hand 404 for purposes of performing virtual application of a ring with image warping.

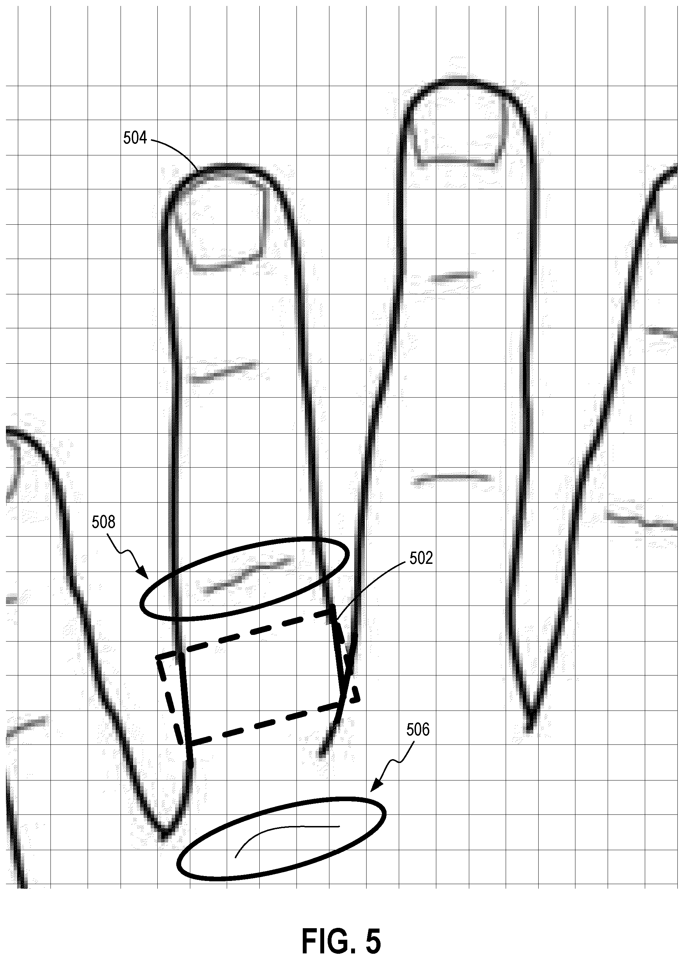

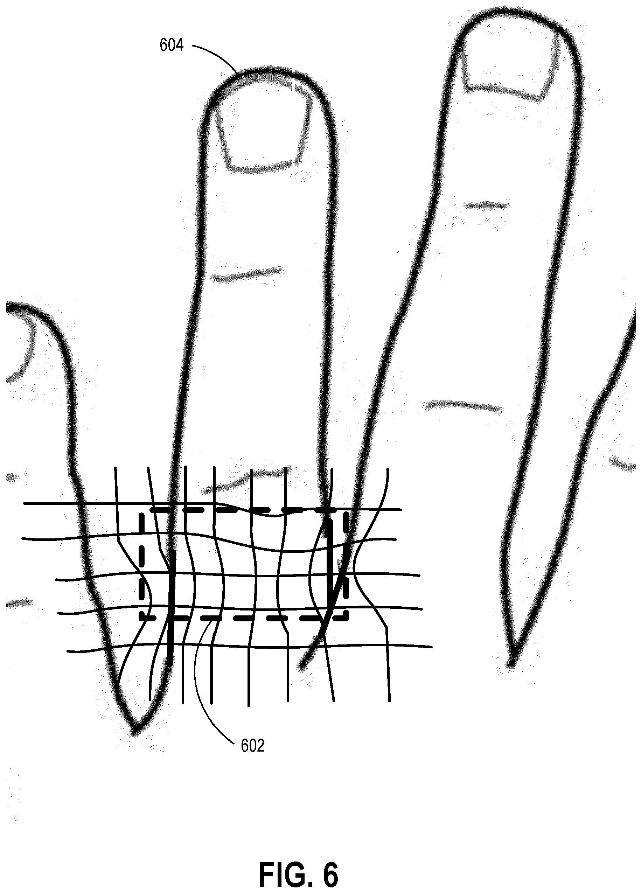

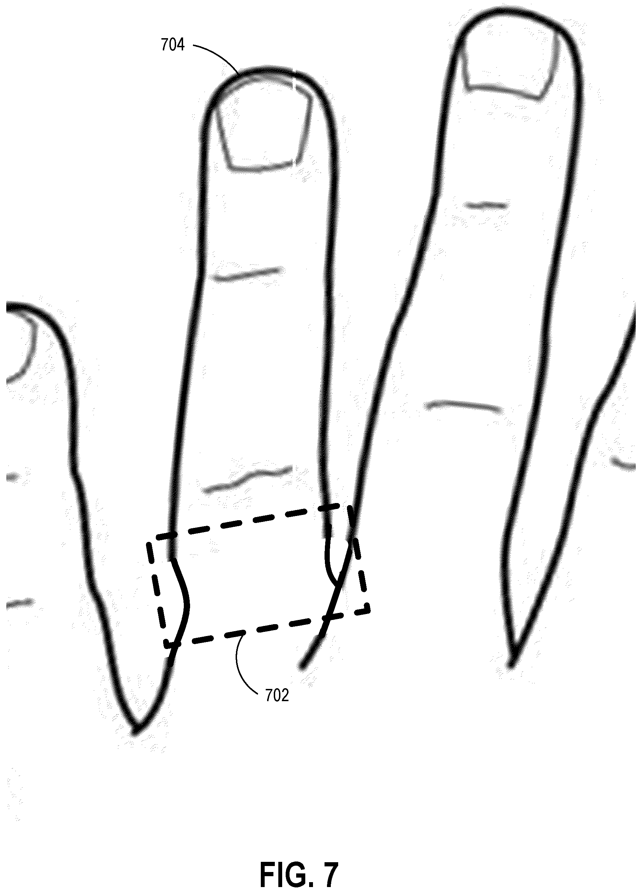

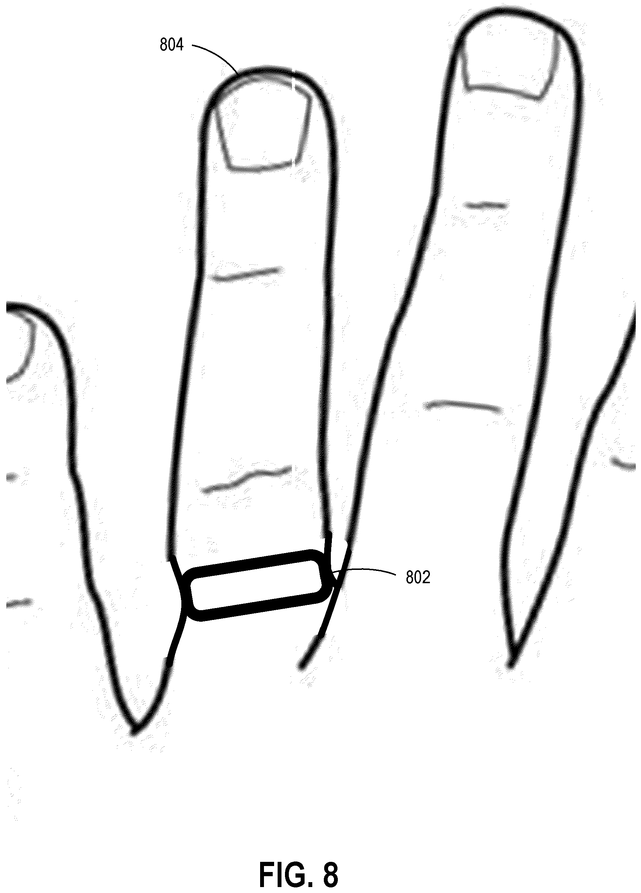

FIG. 5 illustrates the computing device 102 in FIG. 1 identifying a target region 502 for performing image warping. For some embodiments, the computing device 102 determines attributes of the finger 504 on the hand by identifying a target region 502 between two knuckles 506, 508 on the finger. The computing device 102 then determines the coordinates of the target region 502, a boundary of the target region 502, and/or an orientation of the target region 502. FIG. 6 illustrates the computing device 102 in FIG. 1 generating a displacement table for performing image warping on the target region 602 based on attributes of the finger 604. The displacement table corresponds to the warping in the target region 602 shown in FIG. 6. FIG. 7 illustrates application of the displacement table to the target region 702 to generate a modified finger 704. FIG. 8 illustrates virtual application of a ring 802 on the modified finger 804 after application of the displacement table.

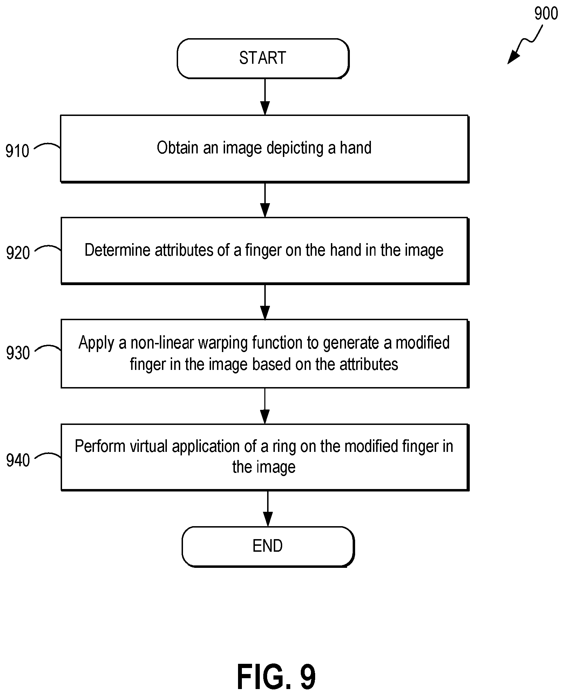

Reference is made to FIG. 9, which is a flowchart 900 in accordance with an alternative embodiment for performing virtual application of a ring with image warping, where the operations are performed by the computing device 102 of FIG. 1. It is understood that the flowchart 900 of FIG. 9 provides merely an example of the different types of functional arrangements that may be employed to implement the operation of the various components of the computing device 102. As an alternative, the flowchart 900 of FIG. 9 may be viewed as depicting an example of steps of a method implemented in the computing device 102 according to one or more embodiments.

Although the flowchart 900 of FIG. 9 shows a specific order of execution, it is understood that the order of execution may differ from that which is displayed. For example, the order of execution of two or more blocks may be scrambled relative to the order shown. In addition, two or more blocks shown in succession in FIG. 9 may be executed concurrently or with partial concurrence.

At block 910, the computing device 102 obtains an image depicting a hand. As discussed above, the user may utilize a camera of the computing device 102 to capture an image of the user's hand. At block 920, the computing device 102 determines attributes of a finger on the hand in the image. For some embodiments, the computing device 102 determines attributes of the finger by identifying a target region between two knuckles on the finger and determining coordinates of the target region, a boundary of the target region, and/or an orientation of the target region.

For some embodiments, the computing device 102 determines the orientation of the target region by determining a roll angle of the target region, a yaw angle of the target region, and/or a pitch angle of the target region. At block 930, the computing device 102 applies a non-linear warping function to generate a modified finger in the image based on the attributes. At block 940, the computing device 102 performs virtual application of a ring on the modified finger in the image. Thereafter, the process in FIG. 9 ends.

It should be emphasized that the above-described embodiments of the present disclosure are merely possible examples of implementations set forth for a clear understanding of the principles of the disclosure. Many variations and modifications may be made to the above-described embodiment(s) without departing from the scope of the invention, which is defined in the appended claims.

## Claims

1. A method implemented in a computing device (102), comprising:
obtaining an image depicting a hand;
determining attributes of a finger (604) on the hand in the image;
generating a displacement table comprising locations of pixels for the finger (604) based on the attributes;
applying the displacement table to generate a modified finger (704, 804), wherein the modified finger (704, 804) depicts the finger (604) being squeezed by a ring; and
performing virtual application of a ring on the modified finger (704, 804).

2. The method of claim 1, wherein determining attributes of the finger (604) comprises:
identifying a target region (502) between two knuckles (506, 508) on the finger (604); and
determining at least one of: coordinates of the target region (502), a boundary of the target region (502), and an orientation of the target region (502).

3. The method of claim 2, wherein determining the orientation of the target region (502) comprises determining at least one of: a roll angle of the target region (502), a yaw angle of the target region (502), and a pitch angle of the target region (502).

4. The method of claim 1, wherein generating the displacement table comprising the locations of the pixels for the finger (604) based on the attributes comprises generating a mapping function comprising a non-linear warp function in an image domain based on the attributes.

5. A method implemented in a computing device (102), comprising:
obtaining an image depicting a hand;
determining attributes of a finger (604) on the hand in the image;
applying a non-linear warping function to generate a modified finger (704, 804) in the image based on the attributes, wherein the modified finger (704, 804) depicts the finger (604) being squeezed by a ring; and
performing virtual application of a ring on the modified finger (704, 804) in the image.

6. The method of claim 5, wherein determining attributes of the finger (604) comprises:
identifying a target region (502) between two knuckles (506, 508) on the finger (604); and
determining at least one of: coordinates of the target region (502), a boundary of the target region (502), and an orientation of the target region (502).

7. The method of claim 6, wherein determining the orientation of the target region (502) comprises determining at least one of: a roll angle of the target region (502), a yaw angle of the target region (502), and a pitch angle of the target region (502).

8. A system, comprising:
a memory (214) storing instructions;
a processor coupled to the memory (214) and configured by the instructions to at least:
obtain an image depicting a hand;
determine attributes of a finger (604) on the hand in the image;
generate a displacement table comprising locations of pixels for the finger (604) based on the attributes;
apply the displacement table to generate a modified finger (704, 804), wherein the modified finger (704, 804) depicts the finger (604) being squeezed by a ring; and
perform virtual application of a ring on the modified finger (704, 804).

9. The system of claim 8, wherein the processor is configured to determine attributes of the finger (604) by:
identifying a target region (502) between two knuckles (506, 508) on the finger (604); and
determining at least one of: coordinates of the target region (502), a boundary of the target region (502), and an orientation of the target region (502).

10. The system of claim 9, wherein the processor is configured to determine the orientation of the target region (502) by determining at least one of: a roll angle of the target region (502), a yaw angle of the target region (502), and a pitch angle of the target region (502).

11. The system of claim 8, wherein the processor is configured to generate the displacement table comprising the locations of the pixels for the finger (604) based on the attributes by generating a mapping function comprising a non-linear warp function in an image domain based on the attributes.

12. A non-transitory computer-readable storage medium storing instructions to be implemented by a computing device (102)having a processor, wherein the instructions, when executed by the processor, cause the computing device (102) to at least:
obtain an image depicting a hand;
determine attributes of a finger (604) on the hand in the image;
generate a displacement table comprising locations of pixels for the finger (604) based on the attributes;
apply the displacement table to generate a modified finger (704, 804), wherein the modified finger (704, 804) depicts the finger (604) being squeezed by a ring;
and
perform virtual application of a ring on the modified finger (704, 804).

13. The non-transitory computer-readable storage medium of claim 12,
wherein the processor is configured by the instructions to determine attributes of the finger (604) by:
identifying a target region (502) between two knuckles (506, 508) on the finger (604); and
determining at least one of: coordinates of the target region (502), a boundary of the target region (502), and an orientation of the target region (502).

14. The non-transitory computer-readable storage medium of claim 13,
wherein the processor is configured by the instructions to determine the orientation of the target region (502) by determining at least one of: a roll angle of the target region (502), a yaw angle of the target region (502), and a pitch angle of the target region (502).

15. The non-transitory computer-readable storage medium of claim 12,
wherein the processor is configured by the instructions to generate the displacement table comprising the locations of the pixels for the finger (604) based on the attributes by generating a mapping function comprising a non-linear warp function in an image domain based on the attributes.

16. A system, comprising:
a memory (214) storing instructions;
a processor coupled to the memory (214) and configured by the instructions to at least:
obtain an image depicting a hand;
determine attributes of a finger (604) on the hand in the image;
apply a non-linear warping function to generate a modified finger (704, 804) in the image based on the attributes, wherein the modified finger (704, 804) depicts the finger (604) being squeezed by a ring; and
perform virtual application of a ring on the modified finger (704, 804) in the image.

17. A non-transitory computer-readable storage medium storing instructions to be implemented by a computing device (102) having a processor, wherein the instructions, when executed by the processor, cause the computing device (102) to at least:
obtain an image depicting a hand;
determine attributes of a finger (604) on the hand in the image;
apply a non-linear warping function to generate a modified finger (704, 804) in the image based on the attributes, wherein the modified finger (704, 804) depicts the finger (604) being squeezed by a ring; and
perform virtual application of a ring on the modified finger (704, 804) in the image.

## Patentansprüche

1. Verfahren, das in einer Rechenvorrichtung (102) implementiert ist, das folgende Schritte aufweist:
Erhalten eines Bildes, das eine Hand darstellt;
Bestimmen von Attributen eines Fingers (604) an der Hand in dem Bild;
Erzeugen einer Verschiebungstabelle, die Positionen von Pixeln für den Finger (604) aufweist, basierend auf den Attributen;
Anwenden der Verschiebungstabelle, um einen modifizierten Finger (704, 804) zu erzeugen, wobei der modifizierte Finger (704, 804) den Finger (604) darstellt, der durch einen Ring gedrückt wird; und
Durchführen einer virtuellen Anwendung eines Rings an dem modifizierten Finger (704, 804).

2. Verfahren gemäß Anspruch 1, wobei das Bestimmen von Attributen des Fingers (604) folgende Schritte aufweist:
Identifizieren einer Zielregion (502) zwischen zwei Fingergelenken (506, 508) an dem Finger (604); und
Bestimmen von Koordinaten der Zielregion (502), einer Grenze der Zielregion (502) und/oder einer Orientierung der Zielregion (502).

3. Verfahren gemäß Anspruch 2, wobei das Bestimmen der Orientierung der Zielregion (502) ein Bestimmen eines Rollwinkels der Zielregion (502), eines Gierwinkels der Zielregion (502) und/oder eines Nickwinkels der Zielregion (502) aufweist.

4. Verfahren gemäß Anspruch 1, wobei das Erzeugen der Verschiebungstabelle, die die Positionen der Pixel für den Finger (604) aufweist, basierend auf den Attributen ein Erzeugen einer Abbildungsfunktion, die eine nichtlineare Warp-Funktion in einem Bildbereich aufweist, basierend auf den Attributen aufweist.

5. Verfahren, das in einer Rechenvorrichtung (102) implementiert ist, das folgende Schritte aufweist:
Erhalten eines Bildes, das eine Hand darstellt;
Bestimmen von Attributen eines Fingers (604) an der Hand in dem Bild;
Anwenden einer nichtlinearen Warp-Funktion, um einen modifizierten Finger (704, 804) in dem Bild basierend auf den Attributen zu erzeugen, wobei der modifizierte Finger (704, 804) den Finger (604) darstellt, der durch einen Ring gedrückt wird; und
Durchführen einer virtuellen Anwendung eines Rings an dem modifizierten Finger (704, 804) in dem Bild.

6. Verfahren gemäß Anspruch 5, wobei das Bestimmen von Attributen des Fingers (604) folgende Schritte aufweist:
Identifizieren einer Zielregion (502) zwischen zwei Fingergelenken (506, 508) an dem Finger (604); und
Bestimmen von Koordinaten der Zielregion (502), einer Grenze der Zielregion (502) und/oder einer Orientierung der Zielregion (502).

7. Verfahren gemäß Anspruch 6, wobei das Bestimmen der Orientierung der Zielregion (502) ein Bestimmen eines Rollwinkels der Zielregion (502), eines Gierwinkels der Zielregion (502) und/oder eines Nickwinkels der Zielregion (502) aufweist.

8. System, das folgende Merkmale aufweist:
einen Speicher (214), der Anweisungen speichert;
einen Prozessor, der mit dem Speicher (214) gekoppelt ist und durch die Anweisungen zumindest zu Folgendem konfiguriert ist:
Erhalten eines Bildes, das eine Hand darstellt;
Bestimmen von Attributen eines Fingers (604) an der Hand in dem Bild;
Erzeugen einer Verschiebungstabelle, die Positionen von Pixeln für den Finger (604) aufweist, basierend auf den Attributen;
Anwenden der Verschiebungstabelle, um einen modifizierten Finger (704, 804) zu erzeugen, wobei der modifizierte Finger (704, 804) den Finger (604) darstellt, der durch einen Ring gedrückt wird; und
Durchführen einer virtuellen Anwendung eines Rings an dem modifizierten Finger (704, 804).

9. System gemäß Anspruch 8, wobei der Prozessor dazu konfiguriert ist, Attribute des Fingers (604) zu bestimmen durch:
Identifizieren einer Zielregion (502) zwischen zwei Fingergelenken (506, 508) an dem Finger (604); und
Bestimmen von Koordinaten der Zielregion (502), einer Grenze der Zielregion (502) und/oder einer Orientierung der Zielregion (502).

10. System gemäß Anspruch 9, wobei der Prozessor dazu konfiguriert ist, die Orientierung der Zielregion (502) durch Bestimmen eines Rollwinkels der Zielregion (502), eines Gierwinkels der Zielregion (502) und/oder eines Nickwinkels der Zielregion (502) zu bestimmen.

11. System gemäß Anspruch 8, wobei der Prozessor dazu konfiguriert ist, die Verschiebungstabelle, die die Positionen der Pixel für den Finger (604) aufweist, basierend auf den Attributen zu erzeugen durch Erzeugen einer Abbildungsfunktion, die eine nichtlineare Warp-Funktion in einem Bildbereich aufweist, basierend auf den Attributen.

12. Nichtflüchtiges computerlesbares Speichermedium, das Anweisungen speichert, die durch eine Rechenvorrichtung (102) mit einem Prozessor zu implementieren sind, wobei die Anweisungen, wenn sie durch den Prozessor ausgeführt werden, die Rechenvorrichtung (102) zumindest zu Folgendem veranlassen:
Erhalten eines Bildes, das eine Hand darstellt;
Bestimmen von Attributen eines Fingers (604) an der Hand in dem Bild;
Erzeugen einer Verschiebungstabelle, die Positionen von Pixeln für den Finger (604) aufweist, basierend auf den Attributen;
Anwenden der Verschiebungstabelle, um einen modifizierten Finger (704, 804) zu erzeugen, wobei der modifizierte Finger (704, 804) den Finger (604) darstellt, der durch einen Ring gedrückt wird; und
Durchführen einer virtuellen Anwendung eines Rings an dem modifizierten Finger (704, 804).

13. Nichtflüchtiges computerlesbares Speichermedium gemäß Anspruch 12, wobei der Prozessor durch die Anweisungen dazu konfiguriert ist, Attribute des Fingers (604) zu bestimmen durch:
Identifizieren einer Zielregion (502) zwischen zwei Fingergelenken (506, 508) an dem Finger (604); und
Bestimmen von Koordinaten der Zielregion (502), einer Grenze der Zielregion (502) und/oder einer Orientierung der Zielregion (502).

14. Nichtflüchtiges computerlesbares Speichermedium gemäß Anspruch 13, wobei der Prozessor durch die Anweisungen dazu konfiguriert ist, die Orientierung der Zielregion (502) durch Bestimmen eines Rollwinkels der Zielregion (502), eines Gierwinkels der Zielregion (502) und/oder eines Nickwinkels der Zielregion (502) zu bestimmen.

15. Nichtflüchtiges computerlesbares Speichermedium gemäß Anspruch 12, wobei der Prozessor durch die Anweisungen dazu konfiguriert ist, die Verschiebungstabelle, die die Positionen der Pixel für den Finger (604) aufweist, basierend auf den Attributen zu erzeugen durch Erzeugen einer Abbildungsfunktion, die eine nichtlineare Warp-Funktion in einem Bildbereich aufweist, basierend auf den Attributen.

16. System, das folgende Merkmale aufweist:
einen Speicher (214), der Anweisungen speichert;
einen Prozessor, der mit dem Speicher (214) gekoppelt ist und durch die Anweisungen zumindest zu Folgendem konfiguriert ist:
Erhalten eines Bildes, das eine Hand darstellt;
Bestimmen von Attributen eines Fingers (604) an der Hand in dem Bild;
Anwenden einer nichtlinearen Warp-Funktion, um einen modifizierten Finger (704, 804) in dem Bild basierend auf den Attributen zu erzeugen, wobei der modifizierte Finger (704, 804) den Finger (604) darstellt, der durch einen Ring gedrückt wird; und
Durchführen einer virtuellen Anwendung eines Rings an dem modifizierten Finger (704, 804) in dem Bild.

17. Nichtflüchtiges computerlesbares Speichermedium, das Anweisungen speichert, die durch eine Rechenvorrichtung (102) mit einem Prozessor zu implementieren sind, wobei die Anweisungen, wenn sie durch den Prozessor ausgeführt werden, die Rechenvorrichtung (102) zumindest zu Folgendem veranlassen:
Erhalten eines Bildes, das eine Hand darstellt;
Bestimmen von Attributen eines Fingers (604) an der Hand in dem Bild;
Anwenden einer nichtlinearen Warp-Funktion, um einen modifizierten Finger (704, 804) in dem Bild basierend auf den Attributen zu erzeugen, wobei der modifizierte Finger (704, 804) den Finger (604) darstellt, der durch einen Ring gedrückt wird; und
Durchführen einer virtuellen Anwendung eines Rings an dem modifizierten Finger (704, 804) in dem Bild.

## Revendications

1. Procédé mis en œuvre dans un dispositif informatique (102), comprenant :
l'obtention d'une image représentant une main ;
la détermination des attributs d'un doigt (604) sur la main dans l'image ;
la génération d'un tableau de déplacement comprenant les emplacements des pixels pour le doigt (604) sur la base des attributs ;
l'application du tableau de déplacement pour générer un doigt modifié (704, 804), dans lequel le doigt modifié (704, 804) représente le doigt (604) serré par une bague ; et
la réalisation de l'application virtuelle d'une bague sur le doigt modifié (704, 804).

2. Procédé selon la revendication 1, dans lequel la détermination des attributs du doigt (604) comprend :
l'identification d'une région cible (502) entre deux articulations (506, 508) sur le doigt (604) ; et
la détermination d'au moins l'un : des coordonnées de la région cible (502), d'une limite de la région cible (502) et d'une orientation de la région cible (502).

3. Procédé selon la revendication 2, dans lequel la détermination de l'orientation de la région cible (502) comprend la détermination d'au moins l'un : d'un angle de roulis de la région cible (502), un angle de lacet de la région cible (502) et un angle de tangage de la région cible (502).

4. Procédé selon la revendication 1, dans lequel la génération du tableau de déplacement comprenant les emplacements des pixels pour le doigt (604) sur la base des attributs comprend la génération d'une fonction de mappage comprenant une fonction de déformation non linéaire dans un domaine d'image sur la base des attributs.

5. Procédé mis en œuvre dans un dispositif informatique (102), comprenant :
l'obtention d'une image représentant une main ;
la détermination des attributs d'un doigt (604) sur la main dans l'image ;
l'application d'une fonction de déformation non linéaire pour générer un doigt modifié (704, 804) dans l'image sur la base des attributs, dans lequel le doigt modifié (704, 804) représente le doigt (604) serré par une bague ; et
la réalisation de l'application virtuelle d'une bague sur le doigt modifié (704, 804) dans l'image.

6. Procédé selon la revendication 5, dans lequel la détermination des attributs du doigt (604) comprend :
l'identification d'une région cible (502) entre deux articulations (506, 508) sur le doigt (604) ; et
la détermination d'au moins l'un : des coordonnées de la région cible (502), d'une limite de la région cible (502) et d'une orientation de la région cible (502).

7. Procédé selon la revendication 6, dans lequel la détermination de l'orientation de la région cible (502) comprend la détermination d'au moins l'un : d'un angle de roulis de la région cible (502), un angle de lacet de la région cible (502) et un angle de tangage de la région cible (502).

8. Système, comprenant :
une mémoire (214) stockant des instructions ;
un processeur couplé à la mémoire (214) et configuré par les instructions pour au moins :
obtenir une image représentant une main ;
déterminer les attributs d'un doigt (604) sur la main dans l'image ;
générer un tableau de déplacement comprenant les emplacements des pixels pour le doigt (604) sur la base des attributs ;
appliquer le tableau de déplacement pour générer un doigt modifié (704, 804), dans lequel le doigt modifié (704, 804) représente le doigt (604) serré par une bague ; et
réaliser l'application virtuelle d'une bague sur le doigt modifié (704, 804).

9. Système selon la revendication 8, dans lequel le processeur est configuré pour déterminer les attributs du doigt (604) en :
identifiant une région cible (502) entre deux articulations (506, 508) sur le doigt (604) ; et
déterminer au moins l'un : des coordonnées de la région cible (502), d'une limite de la région cible (502) et d'une orientation de la région cible (502).

10. Système selon la revendication 9, dans lequel le processeur est configuré pour déterminer l'orientation de la région cible (502) en déterminant au moins l'un : d'un angle de roulis de la région cible (502), un angle de lacet de la région cible (502) et un angle de tangage de la région cible (502).

11. Système selon la revendication 8, dans lequel le processeur est configuré pour générer le tableau de déplacement comprenant les emplacements des pixels pour le doigt (604) sur la base des attributs en générant une fonction de mappage comprenant une fonction de déformation non linéaire dans un domaine d'image sur la base des attributs.

12. Support de stockage non transitoire lisible par ordinateur stockant des instructions devant être mises en œuvre par un dispositif informatique (102) comportant un processeur, dans lequel les instructions, lorsqu'elles sont exécutées par le processeur, amènent le dispositif informatique (102) à au moins :
obtenir une image représentant une main ;
déterminer les attributs d'un doigt (604) sur la main dans l'image ;
générer un tableau de déplacement comprenant les emplacements des pixels pour le doigt (604) en fonction des attributs ;
appliquer le tableau de déplacement pour générer un doigt modifié (704, 804), dans lequel le doigt modifié (704, 804) représente le doigt (604) serré par une bague ; et
réaliser l'application virtuelle d'une bague sur le doigt modifié (704, 804).

13. Support de stockage non transitoire lisible par ordinateur selon la revendication 12, dans lequel le processeur est configuré par les instructions pour déterminer les attributs du doigt (604) en :
identifiant une région cible (502) entre deux articulations (506, 508) sur le doigt (604) ; et
déterminant au moins l'un : des coordonnées de la région cible (502), d'une limite de la région cible (502) et d'une orientation de la région cible (502).

14. Support de stockage non transitoire lisible par ordinateur selon la revendication 13, dans lequel le processeur est configuré par les instructions pour déterminer l'orientation de la région cible (502) en déterminant au moins l'un : d'un angle de roulis de la région cible (502), un angle de lacet de la région cible (502) et un angle de tangage de la région cible (502).

15. Support de stockage non transitoire lisible par ordinateur selon la revendication 12, dans lequel le processeur est configuré par les instructions pour générer le tableau de déplacement comprenant les emplacements des pixels pour le doigt (604) sur la base des attributs en générant une fonction de mappage comprenant une fonction de déformation non linéaire dans un domaine d'image sur la base des attributs.

16. Système, comprenant :
une mémoire (214) stockant des instructions ;
un processeur couplé à la mémoire (214) et configuré par les instructions pour au moins :
obtenir une image représentant une main ;
déterminer les attributs d'un doigt (604) sur la main dans l'image ;
appliquer une fonction de déformation non linéaire pour générer un doigt modifié (704, 804) dans l'image sur la base des attributs, dans lequel le doigt modifié (704, 804) représente le doigt (604) serré par une bague ; et
réaliser une application virtuelle d'une bague sur le doigt modifié (704, 804) dans l'image.

17. Support de stockage non transitoire lisible par ordinateur stockant des instructions devant être mises en œuvre par un dispositif informatique (102) comportant un processeur, dans lequel les instructions, lorsqu'elles sont exécutées par le processeur, amènent le dispositif informatique (102) à au moins :
obtenir une image représentant une main ;
déterminer les attributs d'un doigt (604) sur la main dans l'image ;
appliquer une fonction de déformation non linéaire pour générer un doigt modifié (704, 804) dans l'image sur la base des attributs, dans lequel le doigt modifié (704, 804) représente le doigt (604) serré par une bague ; et
réaliser une application virtuelle d'une bague sur le doigt modifié (704, 804) dans l'image.
